# EUROPÄISCHE PATENTSCHRIFT

(11) **EP 0 346 984 B1**
(45) Veröffentlichungstag und Bekanntmachung des Hinweises auf die Patenterteilung: **05.10.1994**
(21) Anmeldenummer: 89201503.3
(22) Anmeldetag: 12.06.1989
(51) Int. Cl.: G11B 15/10, G11B 15/02

(54) **Laufwerk für ein Magnetbandkassettengerät mit einem Tonwellenantriebsmotor und mit einer von einem Motorangetriebenen, hin und zurück längsverschieblichen Servostange**
Drive mechanism for a magnetic-tape cassette apparatus with a capstan drive motor and a motor-driven reciprocating servo rod
Mécanisme d'entraînement pour un appareil à cassette à bande magnétique avec un moteur d'entraînement de cabestan et avec une tige asservie, entraînée par un moteur en va et vient

(30) Priorität: 16.06.1988 DE 3820501; 10.05.1989 DE 3915201
(43) Veröffentlichungstag der Anmeldung: 20.12.1989
(73) Patentinhaber: Philips Patentverwaltung GmbH, 22335 Hamburg (DE); Philips Electronics N.V., 5621 BA Eindhoven (NL)
(72) Erfinder: Dietz, Hans-Werner, D-6332 Ehringshausen 5 (DE); Klös-Hein, Karl, D-6301 Wettenberg (DE); Rumpf, Horst-Hermann, D-6348 Herborn-Schönbach (DE)
(74) Vertreter: von Laue, Hanns-Ulrich, Dipl.-Ing.

(56) Entgegenhaltungen:
- EP-A- 0 095 815
- DE-C- 3 719 890
- FR-A- 2 552 914
- GB-A- 2 123 181
- US-A- 4 665 353
- PATENT ABSTRACTS OF JAPAN vol. 9, no. 79 (P-347)(1802) 09 April 1985, & JP-A-59 210555 (MATSUSHITA) 29 November 1984,

## Beschreibung

Die Erfindung bezieht sich auf ein Laufwerk für ein Magnetbandkassettengerät mit einem Tonwellenantriebsmotor und mit einer von einem Servomotor über ein Servogetriebe angetriebenen, hin und zurück längsverschieblichen Steuerstange, die auf ihrem Verschiebeweg Funktionsteile des Gerätes, wie eine Kopfplatte, einen Lademechanismus und einen Umschaltmechanismus steuert unter Zuhilfenahme eines Mikroprozessors, einer Steuervorrichtung für den Servomotor und eines dem Mikroprozessor Schaltsignale zuleitenden und von der Steuerstange schaltbaren Schaltmittels, wobei der Mikroprozessor die Schaltsignale in Steuerbefehle für den Servomotor umsetzt.

Ein solches Laufwerk ist aus der EP-A-0 095 815 bekannt.

Bei Magnetbandgeräten, die zum Abspielen von Bandkassetten, insbesondere sogenannten Compact-Kassetten, eingerichtet sind, ist es bekannt, den Magnetkopf das Laufwerkes gegenüber dem in der Kassette angeordneten Magnetband zu verstellen. Dieses Verstellen findet statt durch die Verstellung einer den Magnetkopf tragenden Kopfplatte. Üblicherweise ist auch ein Lademechanismus vorgesehen, in den eine Compact-Kassette einschiebbar ist und der die eingeschobene Compact-Kassette dann in eine Spielstellung überführt. Dazu wird eine Lift-Vorrichtung eingesetzt. Die Bandlaufrichtung wird bei sogenannten Autoreverse-Geräten mit zwei Spielrichtungen von der Motordrehrichtung bestimmt, wobei Druckrollen gegen eine erste oder eine zweite Tonwelle angedrückt und die Wickelteller für das Magnetband abwechselnd in der einen oder anderen Richtung angetrieben werden.

Aus der DE-A-33 15 822.3 C2 ist darüber hinaus ein Magnetbandgerät bekannt, bei dem mittels eines Motors eine Servostange hin und zurück antreibbar ist in Längsrichtung der Stange, um Lade- bzw. Umschaltfunktionen zwischen den Laufrichtungen auszuführen. Zur Ausübung dieser Funktionen muß die Servostange immer in eine Referenz-Endstellung gefahren werden, aus der heraus dann die verschiedenen Funktionen abgeleitet werden. Dies ist sowohl mechanisch als auch elektrisch aufwendig und erfordert viel Zeit zwischen dem Außerbetriebsetzen einer Spielfunktion und dem erneuten wieder in Betrieb nehmen in einer anderen Funktion.

Bekannt ist es auch, mittels eines Motors die Wickelteller des Laufwerkes zum Zwecke des Aufwickelns unmittelbar anzutreiben. Ein derartiger Antrieb erspart zwar Rutschkupplungen, ist aber als getrennte Antriebseinheit aufwendig.

Aufgabe der Erfindung ist es, einen den Geräteaufbau vereinfachenden Servo- und Steuermechanismus für ein Magnetbandkassettengerät zu schaffen, bei dem die Steuerungs- und Regelungsfunktionen von möglichst wenigen teils elektrischen, teils mechanischen Bauteilen übernommen werden.

Die gestellte Aufgabe ist erfindungsgemäß dadurch gelöst, daß
a) das Schaltmittel auch von einem mechanischen Schaltorgan Schaltbar ist, das von der Steuerstange unabhängige Bewegungen ausführen kann und dessen Stellung gegenüber der Steuerstange während des Servobetriebes von der Steuerstange zeitweise bestimmt wird,
b) der Mikroprozessor aus dem bei jedem mechanischen Anstoßen durch Steuerstange oder Schaltorgan empfangenen Schaltsignal die momentanen räumlichen Stellungen des Schaltmittels der Steuerstange und/oder des Schaltorgans ermittelt aus der Stellung des Schaltmittels und dem gespeicherten letzten, zuvor erhaltenen Schaltsignal,
c) der Mikroprozessor die Schaltsignale des Schaltmittels auch umsetzt in Steuerbefehle für den Tonwellen-Antriebsmotor und eine Haltmagnetvorrichtung für die Kopfplatte, die in der Spiel- bzw. Schnellspulstellung mittels dieser Haltemagnetvorrichtung gehalten wird, wobei der Servomotor die Wickeltellerantreibt.

Alle nach dem Starten bis zum Spielbeginn anfallenden Laufwerksfunktionen, sowohl mechanischer als auch elektrischer Art gehen von der Steuerstange unmittelbar mechanisch oder elektrisch über das Schaltmittel aus, das auf den Mikroprozessor arbeitet. Mechanisch übernehmen die Steuerstange und das Schaltorgan die Verstellung der Kopfplatte und die Umstellung des Wickelteller- und Servoantriebes. Dabei ist auch wichtig, daß die Steuerstange wiederum auch bestimmt, wann das Schaltorgan von ihr unabhängige Bewegungen ausführen kann.

Die Mikroprozessor ist so programmiert, daß er nicht nur Schaltsignale des Schaltmittels elektrisch in Steuerbefehle umwandelt; er ist auch so eingerichtet, daß er jederzeit weiß oder durch Anfahren des nächsten, zur Schaltung von Funktionen vorgesehenen Schaltpunktes eine Selbstorientierung vornimmt, um sich zu vergewissern, in welchem Servofunktionsstadium sich das Laufwerk gerade befindet. Hierzu bedient er sich der Aussage des in ihm gespeicherten letzten, zuvor erhaltenen Schaltsignals und des neuen Schaltsignals, das eine Aussage über die derzeitige Stellung des Schaltmittels macht. Auf diese Weise kann, wenn beispielsweise der Strom ausgeschaltet wurde, der Mikroprozessor nach dem erneuten Stromanschalten in irgendeiner Phase des Servobetriebes über die Steuerstange einen benachbarten Schaltpunkt finden und daraus dann die erforderlichen Steuerbefehle für den Servomotor, den Tonwellen-Antriebsmotor und die Haltemagnetvorrichtung abgeben.

Diese Aufteilung in mechanische und elektrisch-elektronische Funktionsüberwachung erlaubt für die einzelnen Laufwerksfunktionen kurze Zugriffszeiten, die für den Komfort eines Gerätes von großer Bedeutung sind. Die Zahl der Bauteile ist stark reduziert.

Nach einer weiteren Ausgestaltung der Erfindung ist vorgesehen, daß das Schaltmittel ein Schalter ist, der beim Öffnen und beim Schließen mittels einer Schaltnase ein Schaltsignal abgibt. Ein solcher Schalter ist einfach und funktionssicher; das Öffnen und Schließen kann vom Mikroprozessor erkannt werden.

Nach einer weiteren Ausgestaltung der Erfindung ist vorgesehen, daß der Mikroprozessor über die Steuervorrichtung die Drehrichtung des Servomotors vorgibt und die Spannungsversorgung des Servomotors umschaltet zwischen einer hohen Versorgungsspannung für den Betrieb des Lade- und Servomechanismus sowie das Schnellspulen und einer niedrigen Versorgungsspannung für den Wickeltellerantrieb während des Spielbetriebes. Die hohe Versorgungsspannung des Servomotors sorgt dafür, daß die Servobewegungen rasch durchführbar sind und das Umspulen einer Kassette in relativ kurzer Zeit abgeschlossen werden kann. Die niedrige Versorgungsspannung ermöglicht mit demselben Servomotor den Antrieb des einen oder anderen Wickeltellers.

Nach einer weiteren Ausgestaltung der Erfindung ist vorgesehen, daß die Steuervorrichtung mit in den Motorzuleitungen vorgesehenen Brückenleistungsverstärkern versehen ist. Derartige Brückenleistungsverstärker bieten eine bequemen Servomotor.

Nach einer weiteren Ausgestaltung der Erfindung ist vorgesehen, daß die Steuervorrichtung mit einem Impulsdetektor versehen ist, der Betriebsfunktionen des Servomotors über die Spannungsversorgung der Brückenleistungsverstärker detektiert. Die Detektierung erfolgt dabei in der Weise, daß die Spannungsversorgungsleitungen der Brückenleistungsverstärker auf ein Differenzierglied geschaltet sind, das aus der pulsierenden Gleichspannung des Motors zählbare Impulse bildet. Ein mit Gleichstrom betriebener Servo-Kommutatormotor unterbricht den durch ihn fließenden Strom im Zeitpunkt der Kommutierung. Diese Kommutierungsunterbrechungen werden zur Bildung von zählbaren Impulsen genutzt.

Nach einer weiteren Ausgestaltung der Erfindung ist vorgesehen, daß die Impulse des Differenzgliedes über ein Monoflop dem Mikroprozessor zugeführt werden, der die Impulse zählt und daraus Zeitwerte bildet. Solche Zeitwerte können der Geschwindigkeitsüberwachung des Motors, der Bandlängenzählung oder der Bandstop-Detektion dienen.

Nach einer weiteren Ausgestaltung der Erfindung ist vorgesehen, daß der Mikroprozessor die Ist-Zeiten zwischen aufeinanderfolgend empfangenen Schaltsignalen ermittelt und mit einer gespeicherten Soll-Zeiten vergleicht und daß der Mikroprozessor den Servomotor bei unzulässigen Zeitdifferenzen auf die Auswerfdrehrichtung umschaltet. Damit kann der Mikroprozessor Überwachungsfunktionen übernehmen, indem er beispielsweise feststellt, ob die Steuerstange vom Beginn ihrer Bewegung von einem Schaltpunkt des Schaltmittels bis zum Erreichen des nächstfolgenden Schaltpunktes eine gewisse Soll-Zeit überschreitet. Soll-Zeit-Überschreitungen können auf Fehler hindeuten. Im Falle von Soll-Zeit-Überschreitungen schaltet der Mikroprozessor den Servomotor in Auswerf-(Eject)-Richtung um.

Nach einer weiteren Ausgestaltung der Erfindung ist vorgesehen, daß das mechanische Schaltorgan jeweils am Ende des Servobetriebes zum Einleiten des Spielbetriebes von der Steuerstange zur Ausführung eigener Bewegungen freigegeben wird, wobei infolge der eigenen Bewegung des Schaltorgans von diesem elektrisch durch das Anstoßen des Schaltmittels die Einschaltung des Tonwellen-Antriebsmotors sowie die Absenkung der Versorgungsspannung des Servomotors und mechanisch die Umschaltung des Servomotorgetriebes von dem Servoantrieb (Steuerstange) auf dem Bandantrieb (Wickelteller) bewirkt wird. Am Ende einer Servobewegung des Servomechanismus fallen zur Aufnahme des Spielbetriebes mehrere mechanische und elektrische Schaltfunktionen an. Elektrisch ist der Servomotor für den Spielbetrieb vorzubereiten, muß der Tonwellen-Antriebsmotor in Betrieb gesetzt werden und muß eine Stummschaltung des Verstärkers, falls dieser nicht angeschaltet werden muß, aufgehoben werden. Mechanisch muß ein Wechsel des Servomotorgetriebes vom Servoantrieb auf den Wickelantrieb vorgenommen werden. Dies kann bei dem Geräteaufbau allein über das Schaltorgan bewerkstelligt werden.

Nach einer weiteren Ausgestaltung der Erfindung ist vorgesehen, daß das Servomotorgetriebe als Zweifunktionsgetriebe mit angepaßten Untersetzungsgetriebezügen für den Steuerstangenantrieb und den Wickeltellerantrieb ausgebildet ist und daß der Wirkungsgrad des Untersetzungsgetriebezuges für den Wickeltellerantrieb derart ausgelegt ist, daß sich der am Wickelteller wirksame Drehzahl-Drehmomentverlauf des Servomotors so weit an den Wickeldrehzahl-Wickelmomentverlauf anpaßt, daß die Bandzugkraft am aufwickelnden Wickelteller über der Wickeldrehzahl bzw. dem wechselnden Wickeldurchmesser weitgehend gleich ist, wobei als Parameter für die Anpassung die Kennlinie n/Mₘₒ des Servomotors, das Übersetzungsverhältnis und der Wirkungsgrad mit der Zahnradmaterialpaarung herangezogen werden. Durch eine solche Optimierung wird die Einsparung einer Rutschkupplung zwischen Antrieb und Wickelteller möglich. Damit ist ein Störfaktor aus dem Bandbetrieb entfernt, weil Rutschkupplungen wegen der enormen Temperaturdifferenzen in einem Laufwerk für ein Autoradio nur schwer beherrschbar sind. In einem Autoradio muß mit Umfeldtemperaturen von beispielsweise -30°C bis +80°C gerechnet werden. Es gibt keine Rutschkupplung, die diesen extremen Anforderungen gerecht wird. Die Einsparung der Rutschkupplung führt zu einer wesentlichen Verbesserung der Bandlaufqualität.

Die Erfindung wird anhand der Zeichnung näher erläutert. Es zeigen:
Fig. 1 eine schaubildliche Ansicht des Laufwerkes eines Magnetbandgerätes,
Fig. 2 schaubildlich anhand einer Explosionsansicht den Liftmechanismus und den Steuermechanismus einer Kopfplatte und des Liftmechanismus,
Fig. 3 den Mechanismus des Gerätes in Eject-Position in schematischer Darstellung,
Fig. 4 den Mechanismus nach Fig. 3 in seiner Spielposition,
Fig. 5 den Mechanismus nach Fig. 3 in der Stand-by-Position und
Fig. 6 den Mechanismus nach Fig. 3 in einer Schnellspul-Stellung,
Fig. 7 eine Schaltvorrichtung des Laufwerkes,
Fig. 8 einen Kennlinienvergleich zwischen Servomotormoment und benötigtem Wickelmoment,
Fig. 9 eine Kennlinie mit ausgeglichener Zugkraft.

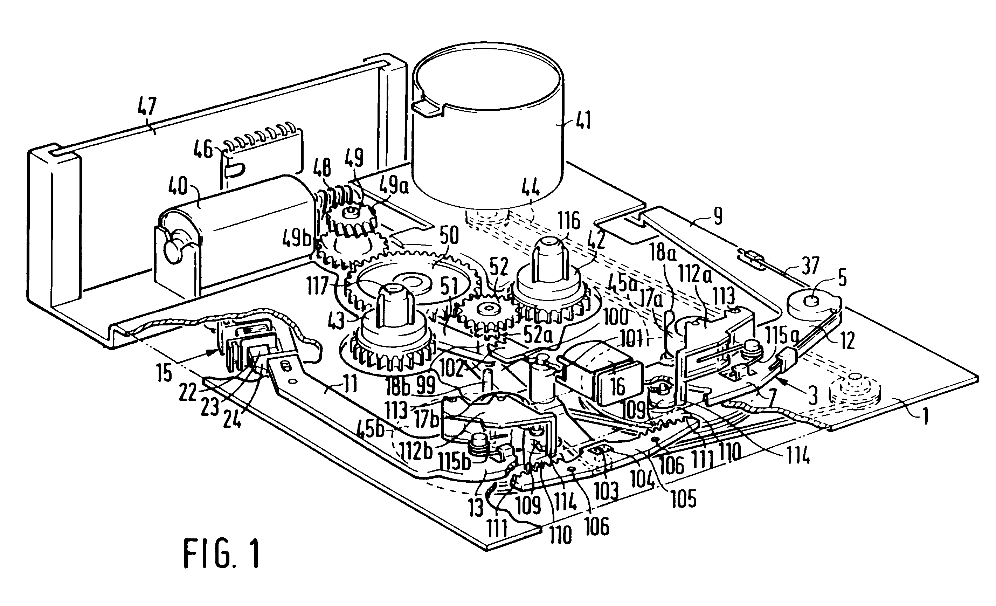

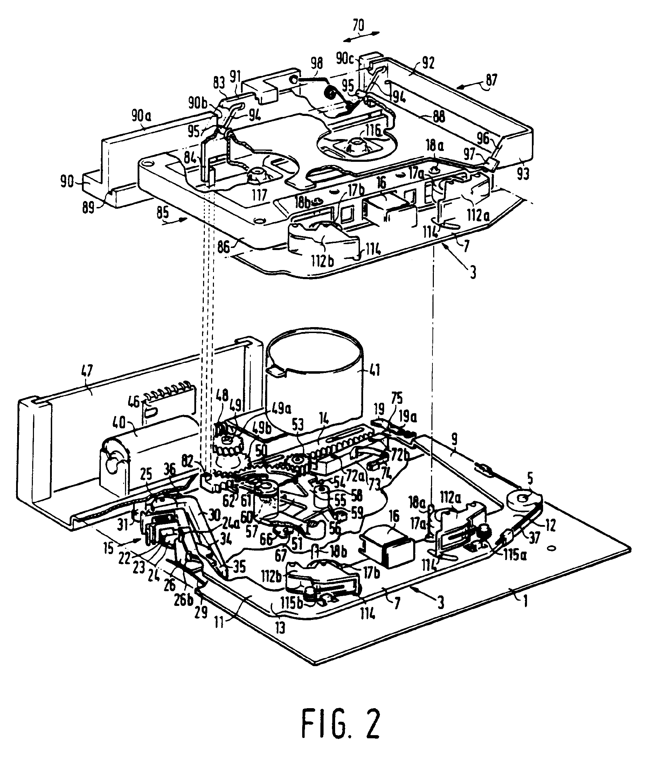

Die Fig. 1 und 2 zeigen eine als Gestell wirkende Chassisplatte 1 eines Magnetband-Kassettengerätes mit einer Kopfplatte 3, die um einen exzentrischen Drehpunkt 5 verschwenkbar ist. Die Kopfplatte 3 ist U-förmig ausgestaltet und weist von den Enden ihrer Basis 7 in gleicher Richtung abstehende erste und zweite Schenkel 9 und 11 auf. Die Schenkel 9 und 11 greifen in Eckbereichen 12 und 13 an. Während der erste Schenkel 9 mit einer Servostange 14 (in Fig. 1 nicht zu sehen) zusammenwirkt, bildet der zweite Schenkel 11 ein Funktionsteil, welches mit einer Elektrohaltemagnetvorrichtung 15 zusammenarbeitet.

Die Basis 7 der Kopfplatte 3 trägt einen Magnetkopf 16 und Andruckrollen 17a, 17b, die gegenüber der Basis 7 verschwenkbar sind. Die Andruckrollen 17a und 17b können mit Tonwellen 18a und 18b zusammengeführt werden, um das Magnetband in der einen oder anderen Richtung an dem Magnetkopf 16 vorbei zu führen.

Die Verschwenkung der Kopfplatte 3 erfolgt jeweils über die Servostange 14. Diese Servostange 14 wirkt auf eine federbelastete Transportnase 19 ein, die am Schenkel 9 schwenkbar angeordnet ist. Über die Servostange 14 kann die Kopfplatte 3 um den exzentrischen Drehpunkt 5 schwenken, und dabei bei jedem Anstoßen mittels der Servostange 14 im Uhrzeigersinn drehen.

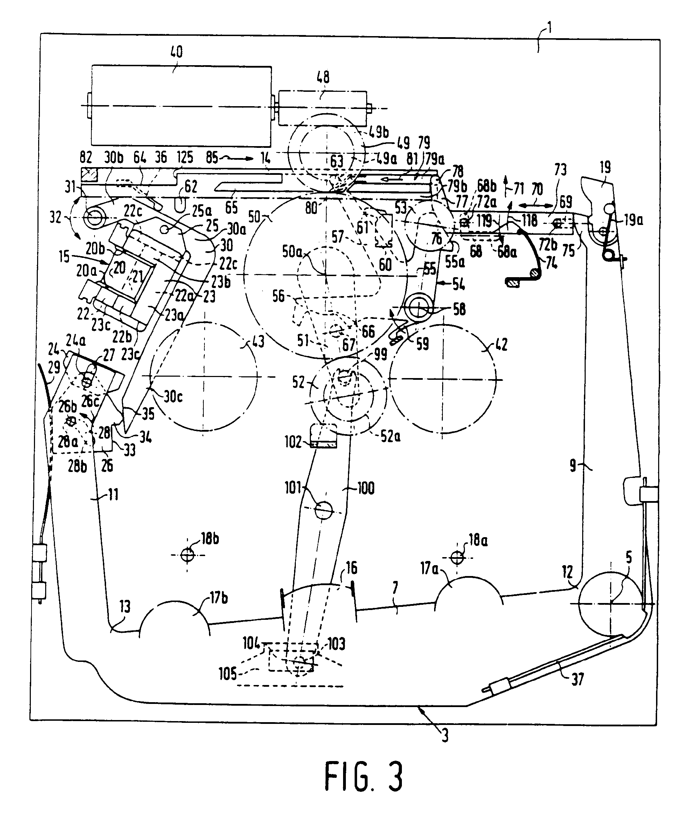

Die Elektrohaltemagnetvorrichtung 15 besteht aus einer Magnetspule 20, in deren Spulenhohlraum 21 (Fig. 3) Schenkel U-förmiger, magnetisch voneinander getrennter Ankereisen 22, 23 eingeschoben sind. Die beiden Ankereisen 22, 23 liegen übereinander, wobei sich die jeweiligen Ankereisenschenkel 22a, 23a paarweise überdecken. Die Eisenjoche 22b, 23b liegen an gegenüberliegenden Spulenenden 20a, 20b. Die Elektrohaltemagnetvorrichtung 15 ist auf der Chassisplatte 1 fest montiert.

An den freien Schenkelenden sind Polschuhe 23c und 22c ausgebildet, die mit einer ersten Ankerplatte 24 und eine zweite Ankerplatte 25 zusammenarbeiten. Die erste Ankerplatte 24 ist mittels eines Stiftes 24a drehbar auf einem Schlitten 26 angeordnet. Dieser Schlitten 26 greift mit dem Stift 24a in eine Leitnut 27 des Schenkels 11. Ein Führungsstift 26b des Schlittens 26 kann in einer gekrümmten Nut 28 des Funktiontsteiles 11 entlang geführt werden. Die bogenförmige Nut 28 verläuft unter einem schrägen Winkel bogenförmig in Richtung auf die Elektrohaltemagnetvorrichtung 15 zu. Eine Feder 29 sorgt dafür, daß der Führungsstift 26b im Normalfall in den Endbereich 28a der bogenförmigen Nut 28 einfährt. In dieser Stellung verläuft der Schlitten 26 oberhalb des Schenkels 11 parallel zu diesem.

Die zweite Ankerplatte 25 ist auf einem Arm 30 mittels eines Stiftes 25a drehbar angeordnet. Der Arm 30 selbst ist L-förmig ausgestaltet und hat einen kürzeren Armteil 30a, der auch die zweite Ankerplatte 25 trägt und der an seinem Ende 30b um eine Drehachse 31 drehbar ist in Richtung eines Doppelpfeiles 32. Ein längerer Armteil 30c erstreckt sich parallel zu der Magnetspule 20 bis zu einer Seitenfläche 33 des Schlittens 26, wo er in der Nähe einer Nase 34 des Schlittens mit einer schrägen Auflauffläche 35 endet.

Die Ankerplatten 24 und 25 können, wenn sie an die Polschuhe 23c bzw. 22c angelegt sind, bei Erregen der Magnetspule 20 an den Polschuhen haften. Durch dieses Haften können sie zwei Arbeitsstellungen der Kopfplatte 3 so lange bestimmen, wie die Magnetspule 20 erregt ist. Erst wenn die Magnetspule 20 entregt wird, fallen beide oder auch nur eine Ankerplatte, je nachdem ob beide oder nur eine angelegt waren, ab, und eine Feder 37, die auf die Basis 7 der Kopfplatte 3 einwirkt, kann die Kopfplatte 3 entgegen dem Uhrzeigersinn in eine Ruhestellung verschwenken. Einzelheiten der Elektrohaltemagnetvorrichtung sind in der DE-Patentanmeldung P 37 14 704.8 beschrieben.

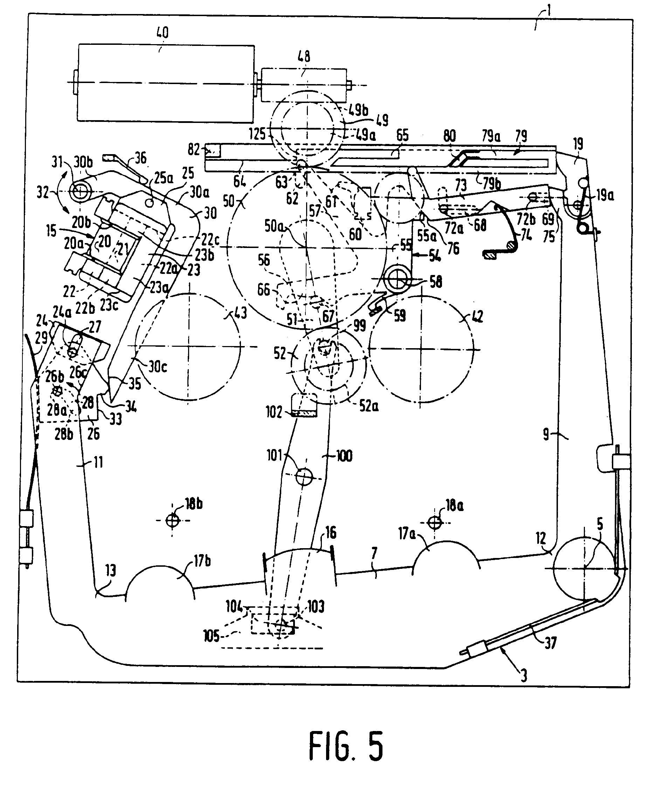

Es wird nun das Zusammenwirken der Kopfplatte mit dem Elektrohaltemagneten anhand von deren Funktion näher beschrieben. Fig. 5 zeigt die sogenannte Stand-by- oder ruhestellung.

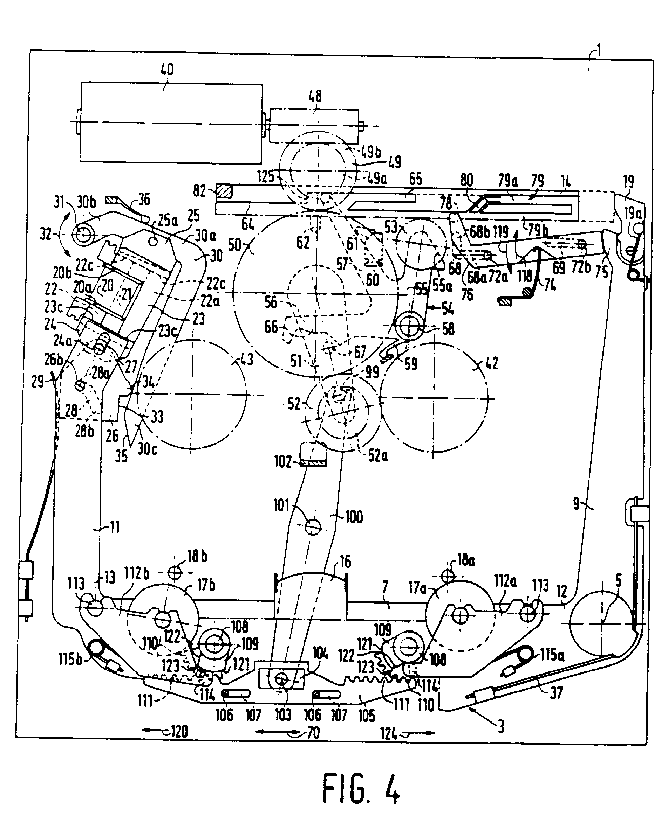

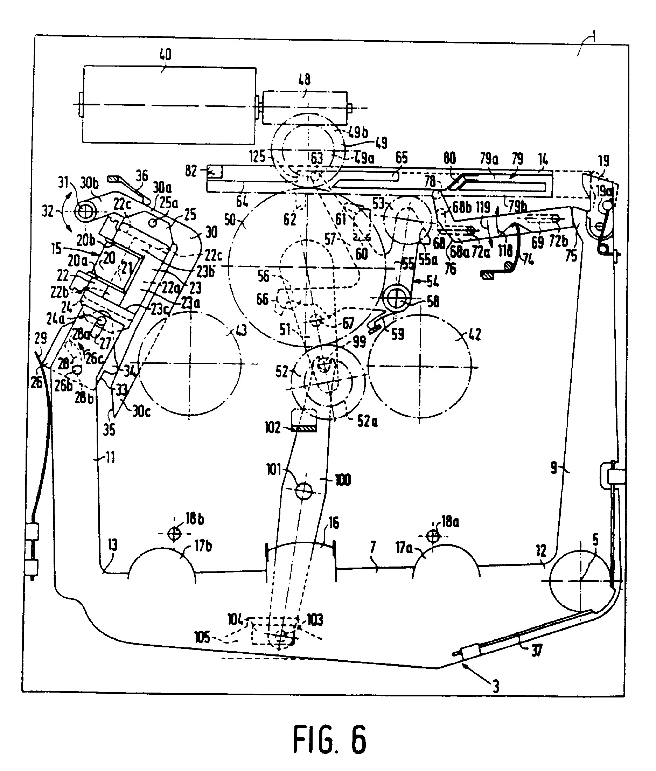

Die Magnetspule 20 ist entregt, und die Ankerplatte 24 ist von den Polschuhen 23c des Ankereisens 23 abgerückt. Die Ankerplatte 25 liegt an den Polschuhen 22c an, da eine Feder 36 für eine ständige Anlage sorgt. Die Feder 37 hält die Kopfplatte 3 im Gegenuhrzeigersinn verschwenkt in der Ruhe- oder Stand-by-Stellung. Sowohl der Magnetkopf 16 als auch die Andruckrollen 17a und 17b geben ein nicht dargestelltes Magnetband, welches zwischen den Andruckrollen/Tonwellenpaaren 17a, 18a/17b, 18b vor dem Magnetkopf 16 vorbeiläuft, völlig frei. Soll die Kopfplatte nun in die Spielstellung, d. h. eine erste Arbeitsstellung (Fig. 4) geschwenkt werden und in dieser ersten Arbeitsstellung verharren, dann stößt die Servostange 14 in der punktierten Lage gegen die Transportnase 19, wodurch die Kopfplatte 3 im Uhrzeigersinn verschwenkt wird. Die Magnetspule 20 bleibt zunächst unerregt. Mit dem Verschwenken der Kopfplatte 3 im Uhrzeigersinn fährt auch der Schenkel 11 in Richtung auf die Elektrohaltemagnetvorrichtung 15 vor. Die Nase 34 des Schlittens 26 stößt gegen die schräge Fläche 35 des längeren Armteiles 30c. Die Feder 36 ist so schwach bemessen, daß die Nase 34 die Fläche 35 und damit den längeren Armteil 30c entgegen dem Uhrzeigersinn nach außen wegdrückt. Der Führungsstift 26b bleibt in dem Endbereich 28a liegen. Das Funktionsteil 11 führt die erste Ankerplatte 24 gegen die Polschuhe 23c. Die Magnetspule 20 wird nun erregt, und die Ankerplatte 24 wird an den Polschuhen 23c festgehalten (Fig. 4). Damit ist gleichzeitig auch die Kopfplatte 3 in der Spielstellung, der ersten Arbeitsstellung, festgehalten. Ist der Spielbetrieb zu Ende oder soll auf schnellen Vorbzw. Rücklauf umgeschaltet werden, dann wird die Magnetspule 20 entregt, und die Feder 37 schwenkt die Kopfplatte entgegendem Uhrzeigersinn wieder in die Ruhe- oder Stand-by-Stellung zurück. Wie das Anfahren der Spielstellung vor sich geht, wurde bereits beschrieben. Es wird nun das Erreichen und Festhalten der Kopfplatte in der Schnellspulstellung (Fig. 6), d. h. der zweiten Arbeitsstellung erläutert. Um in die Schnellspulstellung (Fig. 6) zu kommen, wird zunächst die Magnetspule 20 erregt. Die zweite Ankerplatte 25 liegt bereits an den Polschuhen 22c an, und zu der Kraft der Feder 36 kommt nun noch die magnetische Haltekraft. Es ist damit schwerer geworden, den längeren Armteil 30c entgegen dem Uhrzeigersinn wegzuschwenken. Die Servostange 14 läuft einmal vor und schwenkt die Kopfplatte 3 im Uhrzeigersinn. Die Nase 34 des Schlittens 26 ist nun nicht in der Lage, den längeren Armteil 30c wegzuschwenken. Das bedeutet, daß die Nase 34 vor der Fläche 35 des längeren Armteiles 30c ausweichen muß. Dies führt dazu, daß der Führungsstift 26b zu dem anderen Ende 28b der bogenförmigen Nut 28 geschoben wird. Durch dieses Verschieben rutscht der Schlitten 26 gleichzeitig unter einem Verdrehen in Richtung eines Pfeiles 26c mit dem Leitstift 24a in der Nut 27 in Richtung auf die Elektrohaltemagnetvorrichtung 15. Das bedeutet, daß der Schenkel 11 praktisch in Richtung auf die Elektrohaltemagnetvorrichtung 15 verlängert wird. Dieses Verlängern hat zur Folge, daß der Schenkel 11 nicht so weit in Richtung auf die Elektrohaltemagnetvorrichtung 15 vorfahren kann, wie zuvor in bezug auf die Spielstellung beschrieben wurde. Die Servostange 14 macht allerdings den gleichen Hub und dreht den Transporthebel 19 gegen seine Feder 19a mit Überhub in seine strichpunktierte Lage (Fig. 6). Die Kopfplatte 3 bleibt also ein wenig aus der Spielstellung nach Fig. 4 zurück, und das Magnetband legt sich nicht fest an den Magnetkopf 16 an. Damit ist die Stellung für schnellen Vor- und Rücklauf erreicht. Auch liegt keine der Andruckrollen 17a bzw. 17b an einer der Tonwellen 18a, 18b an.

Soll schneller Vor- oder Rücklauf beendet werden, dann wird die Magnetspule 20 entregt. Das führt dazu, daß sich die Ankerplatte 24 von den Polschuhen 23c löst, und die Feder 37 kann die Kopfplatte 3 entgegen dem Uhrzeigersinn wieder in die Ruhe- oder Stand-by-Stellung (Fig. 5) zurückdrehen. Aufgrund der eben beschriebenen Konstruktion muß immer in die Ruhe- oder Stand-by-Stellung zurückgefahren werden, ehe wieder in die Play- oder Schnellspulstellung vorgefahren werden kann.

Auf der Chassisplatte 1 sind zwei Motoren 40, 41 angeordnet. Der Motor 40 dient der Steuerung der Bewegungen der Kopfplatte 3 sowie dem Antrieb der Wickelteller 42, 43.

Der Tonwellen-Motor 41 treibt über eine Peese 44 die Tonwellen 18a, 18b an. Dieser Antrieb findet statt über Schwungscheiben 45a, 45b. Die Peese 44 ist dabei S-förmig um die Schwingscheiben 45a, 45b gelegt, um gegenläufige Drehrichtungen der Tonwellen 18a, 18b zu bewirken. Die Motoren werden gesteuert über einen Mikroprozessor 46, der an einer Schaltungsplatte 47 angeordnet ist. Die Schaltungsplatte 47 ist an der Chassisplatte 1 angeordnet.

Der Servomotor 40 wirkt auf ein Servogetriebe 48a ein, zu dem eine Schneckenwelle 48 und ein Untersetzungsrad 49, das aus zwei Teilrädern 49a und 49b besteht, und ein Zentralzahnrad 50 gehören. Um die Achse 50a des Zentralzahnrades 50 ist ein Schwenkarm 51 verschwenkbar, an dem drehbar ein Übertragungszahnrad 52 gelagert ist. Das Übertragungszahnrad 52 ist über eine nicht dargestellte Friktionskupplung zwischen dem Schwenkarm 51 und dem Zentralzahnrad 50 derart verschwenkbar, daß das Übertragungszahnrad 52 wahlweise den einen Wickelteller 42 oder den anderen Wickelteller 43 antreiben kann. Die Servostange 14 ist in Längsrichtung verschieblich antreibbar mittels eines Schaltrades 53. Das Schaltrad 53 gehört zu einem Schaltorgan 54 und ist an einem Betätigungsglied 55 des Schaltorganes 54 drehbar gelagert. Das Schaltorgan 54 hat weiterhin noch ein Freigabeglied 56 und ein Positionierglied 57. Das Schaltorgan 54 ist drehbar gelagert um eine Achse 58 und wird mit Hilfe eines federnden Armes 59 im Uhrzeigersinn belastet. Auf der Chassisplatte 1 ist ein Steuerschalter 60 angeordnet, dessen Schaltnase 61 mit dem Positionierglied 57 des Schaltorganes 54 sowie einem Schaltansatz 62 der Servostange 14 zusammenarbeiten kann. Die Schaltnase 61 nimmt unbelastet eine Mittelstellung ein, aus der sie nach zwei Seiten weggeschwenkt werden kann. In der Mittelstellung ist der Schalter 60 geöffnet, bei seitlich weggeschwenkter Schaltnase 61 ist der Schalter 60 geschlossen. Bei jeder neuen Bewegung der Schaltnase 61 gibt der Schalter 60 ein Signal ab.

Das Positionierglied 57 weist einen Leitstift 63 auf, dessen Stellung gegenüber der Servostange 14 von dieser bestimmt wird. Eine erste bestimmende Position ist in Fig. 3, 4 und 6 dargestellt, während die zweite bestimmende Position in Fig. 5 dargestellt ist. Zur Positionierung in der zweiten Position weist die Servostange eine Kante 64 auf. Die erste Position wird bestimmt durch eine Nut 65 in der Servostange 14. Die Steuerstange bestimmt somit entweder unmittelbar über die Nut 65 oder mittelbar über das Steuerglied 73 die Stellung des Schaltorganes 54 zwischen dem Beginn des Servobetriebes und dem Ende des Servobetriebes, wo das Laufwerk in Spielbetrieb oder Schnellspulbetrieb übergeht. Das dreiarmige Schaltorgan 54 weist an seinem Freigabeglied 56 eine breite Gabel 66 auf, die mit einem Begrenzungsstift 67 auf dem Schwenkarm 51 zusammenarbeitet.

Auf der Chassisplatte 1 sind zwei Nuten 68, 69 vorgesehen. Die Nut 68 ist dabei L-förmig ausgebildet, während die Nut 69 als Langloch in Verschieberichtung der Servostange 14 ausgebildet ist. Die Verschieberichtung der Servostange ist durch einen Doppelpfeil 70 angegeben. Die Nut 68 hat einen Nutarm 68a in Richtung des Doppelpfeiles 70 und einen senkrecht dazu verlaufenden Arm 68b in einer Richtung senkrecht zu dem Doppelpfeil 70. Diese senkrechte Richtung ist durch einen Pfeil 71 angedeutet. In die Nuten 68 und 69 greifen Leitstifte 72a, 72b eines Steuergliedes 73 ein. Dieses Steuerglied 73 wird mit Hilfe einer Feder 74 in zwei Richtungen gedrängt, und zwar einmal in Richtung auf eine Steuernase 75, die fest verbunden ist mit dem freien Ende des ersten Schenkels 19. Die Steuernase 75 liegt dabei in der Nähe der Transportnase 9. Die zweite Richtung, in der die Feder 74 das Steuerglied 73 drängt, ist die durch den Pfeil 71 angegebene Richtung. An dem Steuerglied 73 ist eine Schräge 76 vorgesehen, die mit einer Schräge 55a an dem Betätigungsglied 55 zusammenwirken kann. Das Steuerglied 73 ist L-förmig ausgebildet mit einem kurzen Armansatz 77, der einen Fahrstift 78 trägt. Dieser Fahrstift wirkt mit einer Einrichtungskulisse 79 in der Servostange 14 zusammen. Diese Einrichtungskulisse besteht aus zwei Bahnen 79a, 79b, die über eine Schadow-Klinke 80 verbunden sind. Diese Schadow-Klinke 80 ist derart federnd ausgebildet, daß der Fahrstift sie zwar in der einen durch einen Pfeil 81 angegebenen Richtung durchfahren kann, jedoch nicht in der Gegenrichtung. Nachdem der Fahrstift 78 durch die Schadow-Klinke 80 in die Bahn 79b eingelaufen ist, kann er nicht mehr in die Schadow-Klinke zurück, sondern muß in der Bahn 79b laufen, die in Richtung des Doppelpfeiles 70 verläuft.

Die Servostange 14 ist mit einem Kupplungsglied 82 versehen, das die Verbindung herstellt zu einem Liftschieber 83. Dieser Liftschieber 83 weist einen Ansatz 84 auf, der einseitig gegen das Kupplungsglied 82 drücken kann, und zwar in Richtung eines Pfeiles 85. Die Richtung des Pfeiles 85 stimmt überein mit der Einschiebrichtung einer Kassette 86 in einen Lademechanismus 87, zu dem der Liftschieber 83 gehört. Der Lademechanismus 87 weist einen Liftschacht 88 auf, der die Kassette 86 aufnimmt.

Der Liftschieber 83 ist in einer Schiebeführung 89 längsverschieblich in Richtung des Doppelpfeiles 70 geführt. Die Schieberführung 89 gehört dabei zu einem Kunststoffteil 90, das auf nicht dargestellte Weise mit der Chassisplatte 1 verbunden ist. Der Liftschieber 83 ist in der Darstellung nach Fig. 2 etwas U-förmig ausgebildet mit einem langen Schenkel 91, einer Basis 92 und einem kurzen Schenkel 93. In dem langen Schenkel 91 sind zwei schräge Kulissen 94 vorgesehen, in denen Stifte 95 des Liftschachtes 88 geführt sind. Der kurze Schenkel 93 ist ebenfalls mit einer schrägen Kulisse 96 versehen, die mit einem Lappen 97 des Liftschachtes zusammenwirkt. Auf diese Weise erfährt der Liftschacht 88 eine Art Dreipunkt-Lagerung oder -Führung gegenüber dem Liftschieber 83. Weiterhin ist eine Übertotpunktfeder 98 vorgesehen, die sich einerseits an dem Kunststoffteil 90 und andererseits an dem langen Schenkel 91 des Liftschiebers 83 abstützt.

Das Kunststoffteil 90 weist einen horizontalen Rand 90a auf, der begrenzt ist durch eine vertikale Randfläche 90b. Parallel zu der vertikalen Randfläche 90b erstreckt sich eine weitere vertikale Randfläche 90c. Der Abstand zwischen den beiden vertikalen Kanten 90b und 90c entspricht dem Abstand der Stifte 95, wobei die Stifte 95 sich zwischen den vertikalen Randflächen 90b und 90c längs dieser bewegen können.

Fig. 1 zeigt weiterhin, daß zwischen den Wickeltellern der Schwenkarm 51 angeordnet ist, der das Übertragungszahnrad 52 lagert. Der Schwenkarm 51 weist ein Gelenk 99 auf, an dem ein Stellhebel 100 angreift, der um ein Kipplager 101 verschwenken kann. In einem Gebiet der Verschwenkbewegung des Übertragungszahnrades 52 ist ein feststehendes Zahnsegment 102 angeordnet, an dem sich das Übertragungszahnrad 52 abrollen kann. Hierzu trägt das übertragungszahnrad an seiner Unterseite ein Teilzahnrad 52a. Auf der vom Gelenk 99 abliegenden Seite des Stellhebels 100 trägt der Stellhebel 100 einen Stift 103, der in einem Langloch 104 begrenzt verschieblich ist. Das Langloch 104 befindet sich in einem Schieber 105, der Stifte 106 aufweist, die in Langlöchern 107 der Chassisplatte verschieblich sind, und zwar parallel zum Doppelpfeil 70.

An der Chassisplatte 1 sind um Achsen 108 Exzenterscheiben 109 verschwenkbar, die mit Zahnsegmenten 110 verbunden sind. Diese Zahnsegmente 110 arbeiten zusammen mit Zahnstangen 111 des Schiebers 105. Somit kann durch ein Verschwenken des Stellhebels 100 um das Kipplager 101 der Stift 103 nach Erreichen der einen oder anderen Endkante des Langloches 104 den Schieber 105 in der einen oder anderen Richtung des Doppelpfeiles 70 verschieben. Bei diesem Verschieben findet ein Verdrehen der Exzenterscheiben 109 statt. Die Andruckrollen 17a, 17b sind in Bügeln 112a, 112b gelagert, die ihrerseits um Achsen 113 verschwenkbar sind. Die Achsen 113 sind auf der Kopfplatte 3 angeordnet. Die Bügel 112a und 112b weisen Stifte 114 auf, die die Oberflächen der Exzenterscheiben 109 abfahren können. Die Bügel 112a und 112b werden mit Hilfe von Federn 115a, 115b in Richtung auf die Tonwellen 18a, 18b federbelastet. Die Federn 115a und 115b drücken die Stifte 114 auch immer gegen die Exzenterscheiben 109.

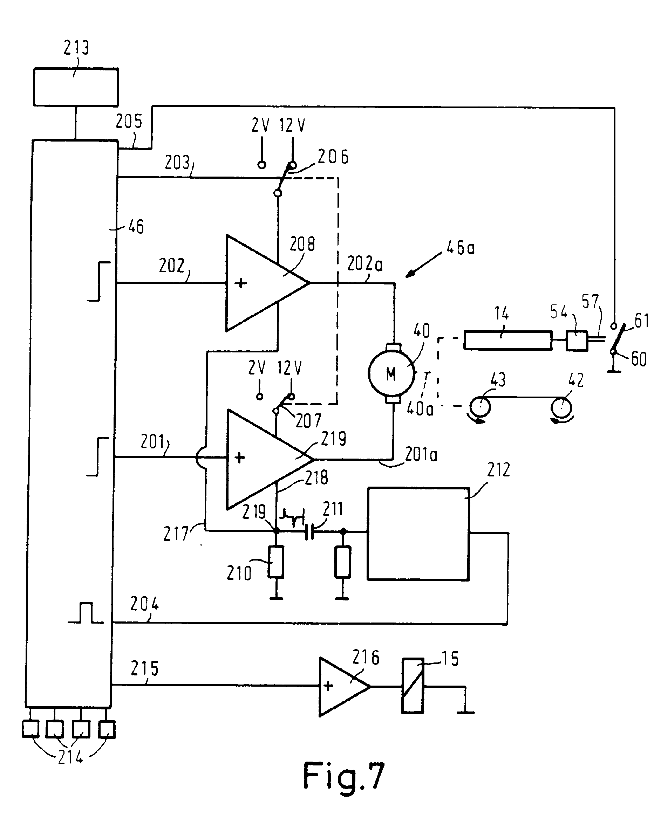

Fig. 7 zeigt eine Schaltungsvorrichtung, die der Steuerung aller Laufwerksfunktionen dient. Dem Mikroprozessor 46 ist dabei eine Motorsteuerung 46a zugeordnet. Der Servo-Motor 40 des Laufwerkes wird über einen Brückenleistungsverstärker, bestehend aus zwei Leistungsverstärkern 208 und 209, betrieben, die über Leitungen 201 und 202 von dem Mikroprozessor 46 gesteuert werden und die über Leitungen 201a und 202a zu dem Servo-Motor 40 durchgeschaltet sind.

Die Motorsteuerung 46a sieht eine Umschaltung der Spannungsversorgung der Leistungsverstärker 208 und 209 zwischen 2 V und 12 V vor. Die Umschaltung wird mit Hilfe von Schaltern 206 und 207 vorgenommen, deren Umschaltung über eine Steuerleitung 203 des Mikroprozessors erfolgt.

Der Servomotor 40 ist über eine gestrichelt angedeutete Kupplung 40a, die aus dem Zahnrad 53 und dem Schaltorgan 54 besteht, wahlweise umschaltbar auf die Servostange 14 oder einen der Wickelteller 42, 43. Das nur als Sinnbild dargestellte Schaltorgan 54 kann mit Hilfe des Positioniergliedes 57 die Schaltnase 61 des Schalters 60 anstoßen. Bei jedem Anstoßen des Schalters 60 entstehen Impulse, die über die Steuerleitung 205 dem Mikroprozessor 46 zugeführt werden.

Der durch den Servomotor 40 und die Leistungsverstärker 208 und 209 fließende Strom wird über Leitungen 217 und 218 einem geerdeten Widerstand 210 zugeführt. Da der von dem Servomotor 40 über die Leitung 201a und 218 fließende Strom infolge von Kommutierungsunterbrechungen pulsierend ist, ergibt sich an dem Schaltpunkt 219 ein pulsierender Spannungsabfall. Über ein Differenzierglied 211 und einen Monoflop 212 werden diese nadelartigen Impulse zu Reckteck-Impulsen aufgearbeitet und dem Mikroprozessor 46 zugeführt. Dieser Mikroprozessor 46 zählt die Impulse und addiert sie. über ein Display 213 lassen sich die aufaddierten Impulse in Form einer Bandlängenanzeige und Drehrichtungsanzeige zur Anzeige bringen.

Es sind Tasten 214 vorgesehen, mit denen einzelne Funktionen des Laufwerkes von Hand bestimmt werden können. Es handelt sich dabei beispielsweise um Bandrichtungsumkehr, Schnellspulen vorwärts und rückwärts und Kassettenauswurf. Die Tasten 214 sind alle mit dem Mikroprozessor 46 verbunden, und dieser steuert dann die mittels Tastendruckes gewünschte Funktion.

Über eine Leitung 215 steuert der Mikroprozessor einen Leistungsverstärker 216 an, der den Elektrohaltemagneten 15 derart steuert, daß die Kopfplatte 3 in der Spielstellung oder in einer Schnellspulstellung gehalten werden kann.

Der Schalter 60 ist ein Ein-/Ausschalter, dessen Einschaltung und Ausschaltung vom Mikroprozessor 46 als definierte Schaltsignale erkannt werden. Der Mikroprozessor erkennt, daß die Schaltnase 61 beim Einschalten frei wird und von selbst in ihre Mittelstellung wandert und daß die Schaltnase 61 beim Ausschalten aus der Mittelstellung weggedrückt wird. Die Stellung eingeschaltet und ausgeschaltet macht eine Aussage darüber, an welchem Schaltpunkt innerhalb des Bewegungsablaufes des Servomechanismus sich Steuerstange 14 und Schaltorgan 54 gerade befinden. Der Mikroprozessor zählt während des Servobetriebes die vom Monoflop 212 abgegebenen Rechteckimpulse und bildet daraus zwischen den einzelnen Schaltpunkten ein Ist-Zeit-Intervall, in dem der Servomechanismus von dem einen Schaltpunkt zum anderen Schaltpunkt gelangt ist. In dem Mikroprozessor sind die Zeitintervalle, die der Servomechanis nun braucht, um von dem einen Schaltpunkt zum anderen zu kommen, gespeichert. Die Mikroprozessor kontrolliert ständig, ob diese Zeitintervalle auch eingehalten werden. Werden die Sollintervalle innerhalb einer gewissen Toleranz nicht eingehalten, dann schaltet der Mikroprozessor den Servomotor 40 automatisch auf die Auswurf-Drehrichtung. Der Mikroprozessor ist weiterhin so ausgelegt, daß er erkennt, an welcher Funktionsstelle sich der Servomechanismus bei dem letzten zuvor erhaltenen Schaltsignal befunden hat.

Befindet sich keine Kassette in dem Laufwerk, dann nimmt dieses die in Fig. 3 dargestellte gegenseitige Stellung der einzelnen Bauteile ein. Soll das Gerät in Betrieb genommen werden, dann wird eine Kassette 86 in den Liftschacht 88 eingeschoben. Bei dem von Hand Einschieben der Kassette nimmt der Ansatz 84 des Liftschiebers das Kupplungsglied 82 mit. Zusammen mit dem Einschieben des Liftschiebers 83 verschiebt sich also auch gleich die Servostange 14. Nun spannt sich die Übertotpunktfeder 98, und nach dem Überschreiten des Übertotpunktes gibt sie ihre Vorspannkraft ab, indem sie den Liftschieber weiter einzieht, ohne daß die Kassette 86 noch von Hand berührt wird. Zusammen mit dem weiteren Einschieben des Liftschiebers verschiebt sich auch die Servostange weiter in der Einzugsrichtung 85. Während dieser Verschiebebewegung der Servostange 14 stoßen die Schrägen 55a und 76 aufeinander, und das Schaltorgan 54 wird entgegen dem Uhrzeigersinn und der Kraft der Feder 59 verschwenkt. Das Schaltrad 53 kuppelt in diesem Startschaltpunkt das Zentralzahnrad 50 mit der Servostange 14. Damit ist der Servoantrieb eingeschaltet. Das Verschwenken des Schaltorgans 54 hat gleichzeitig zur Folge, daß die Schaltnase 61 von dem Positionierglied 57 freigegeben, d. h. der Schalter 60 geöffnet wird.

Ein beim Öffnen gebildeter Schaltimpuls wird vom Mikroprozessor 46 ausgewertet. Dieser erkennt, daß der Schalter 60 offen ist; er setzt die Motorsteuerungseingänge 201, 202 und 203 so, daß der Servomotor 40 in der gewünschten Servo-Einzugsdrehrichtung mit einer Spannung von 12 V anlaufen kann. Die Leistungsverstärker 208 und 209 legen die volle 12 V-Versorgungsspannung an den Servomotor 40. Der mechanisch gekoppelte Servomotor 40 verschiebt die Servostange 14 nun weiter in die Einzugsrichtung 85. Der Ansatz 84 braucht das Kupplungsglied 82 nun nicht mehr mitzunehmen, und der Liftschieber fährt allein mit Hilfe der Kraft der Übertotpunktfeder in Einschieberichtung 45 weiter, und zwar so weit, bis die Stifte 95 längs der vertikalen Randflächen 90b und 90c nach unten gleiten können, wobei die Stifte 95 zugleich in den schrägen Kulissen 94 nach unten gleiten. Gleichzeitig gleitet der Lappen 97 auf der Kulisse 96 nach unten. Dies Nach-Unten-Gleiten ist beendet, wenn der Liftschieber 83 seine hintere Endposition nach Fig. 2 erreicht hat. In dieser Position hat der Liftschacht 88 seine hintere und untere Stellung erreicht, und die Kassette 86 ist auf Wickeldorne 116, 117 aufgesetzt.

Bei der Bewegung der Servostange 14 in Richtung des Einzugspfeiles 85 ist der Fahrstift 78 des Steuergliedes 73 in die Bahn 79a in Richtung des Pfeiles 81 eingelaufen. Die Einlaufposition nimmt der Fahrstift 78 ein unter Wirkung der Feder 74. Das Steuerglied 73 hat sich dabei um den Leitstift 72b verschwenkt. Diese Verschwenkrichtung ist durch Pfeil 118 angegeben. Der Fahrstift 78 läuft über die Schadow-Klinke 80, die ihn nur vor-, jedoch nicht zurücklaufen läßt, in die Bahn 79b ein. Dabei verschwenkt das Steuerglied 73 in Richtung eines Pfeiles 119.

Beim Veschwenken des Schaltorgans 54 zum Öffnen des Schalters wurde der Begrenzungsstift 67 zwischen die Arme der breiten Gabel 66 eingefangen. Die Gabel 67 hat den Begrenzungsstift 67 so weit verschoben, daß das Übertragungszahnrad 52 von dem jeweiligen Wickelteller 42 oder 43 weggedrückt wird. Durch das Verschwenken des Schaltorganes 54 hat also das Servomotorgetriebe 48a zugleich mit dem Einkuppeln des Servo-(Steuerstangen)-Antriebes den Wickeltellerantrieb ausgeschaltet. Das Servomotorgetriebe ist also ein Zweifunktionsgetriebe, das beim Servobetrieb auf die Steuerstange 14 und beim Schnellspul- oder Spielbetrieb auf einen der Wickelteller 42, 43 arbeitet.

Der Antrieb der Servostange 14 über das Schaltrad 53 ist in der Ausfahrrichtung entgegen dem Pfeil 85 selbsteinziehend. Das bedeutet in der Stand-by-Stellung gemäß Fig. 5, daß der Leitstift 63 auf einer Ecke 125 zwischen der Kante 64 und der Nut 65 festgehalten wird. Dies ist die Position, in der die breite Gabel 66 gegen den Begrenzungsstift 67 drückt und das Übertragungszahnrad 52 von den Wickeltellern 42 oder 43 wegdrückt. In der Einzugsrichtung gemäß Pfeil 85 ist der Antrieb mit dem Schaltrad 53 demgegenüber selbstlösend. Dies bedeutet, daß das Schaltrad bei Einzugsbewegungen der Servostange 14, wenn das Steuerglied 73 keine Wegbegrenzung vorgibt, von sich aus mit dem Zentralzahnrad außer Eingriff kommen kann. In umgekehrter Ausfahrrichtung sorgt die selbsteinziehende Richtung des Schaltrades 53 dafür, daß der Leitstift 63 auf der Ecke 125 hängen bleibt, ohne daß der besonders geführt ist.

Vom Startpunkt, in dem der Schalter 60 geöffnet wurde, fährt die Steuerstange 14, um in die Play-Stellung nach Fig. 4 zu kommen, so weit nach rechts, wie dies aus Fig. 4 mit getrichelten Linien angedeutet ist. In dieser Stellung hat die Servostange 14 die Kopfplatte 3 auf die bereits beschriebene Weise in ihre Spielstellung verschwenkt, wie es aus Fig. 1 und 4 zu ersehen ist. In der äußerst rechten Stellung der Servostange 14 (erster Umschaltpunkt, d. h. Kopfplatte in Spielstellung) stößt der Schaltansatz 62 der Servostange 14 die Schalternase 61 an und schließt den Schalter 60. Das Schließen löst einen Schaltimpuls aus, der über die Leitung 205 dem Mikroprozessor 46 zugeführt wird. Der Mikroprozessor erkennt den ersten Umkehrschaltpunkt und steuert die Eingänge 201 und 202 nun so, daß die Leistungsverstärker 208 und 209 den Motor 40 nach einer der Sicherheit dienenden Überlaufzeit von ca. 150 msec anhalten und in der umgekehrten Drehrichtung starten. Um ein Klemmen zu vermeiden, ist zwischen die Zahnräder 49a und 49b eine nicht dargestellte Überlastkupplung gefügt. Der Mikroprozessor schaltet gleichzeitig die Haltemagnetvorrichtung 15 ein. Die Kopfplatte wird damit in Spielstellung festgehalten. Der Mikroprozessor hat das Ist-Zeit-Intervall zwischen Startschaltpunkt und ersten Umkehrschaltpunkt überwacht mit dem ihm bekannten Soll-Zeit-Intervall. Hätte das Ist-Zeit-Intervall das Soll-Zeit-Intervall überschritten, dann hätte der Mikroprozessor den Servomotor 40 von sich aus auf Reset, d. h. in Auswurfrichtung umgesteuert.

Bei dem Anschlagen der Zahnstange 14 an die Schaltnase 61 ist die Kassette vollständig eingezogen und abgesenkt. Der Mikroprozessor 46 startet den Servomotor 40 in der Gegenrichtung. Die Servostange 14 fährt in der Gegenrichtung wieder an. Der Schalter 60 öffnet sich; er gibt einen Schaltimpuls ab, den der Mikroprozessor als zweiten Umkehrschaltpunkt erkennt.

Der Mikroprozessor vermerkt, daß Servoantrieb vom zweiten Umkehrschaltpunkt auf dem Wege zum Servo-Endschaltpunkt ist, in dem in Schnellspul- oder Spielbetrieb übergegangen wird. Kurz vor dem Erreichen des Servo-Endschaltpunktes haben sich das Steuerglied 73 und das Schaltorgan 54 voneinander gelöst. Aufgrund der Kraft der Feder 59 verschwenkt das Schaltorgan 54 im Uhrzeigersinn, wobei der Begrenzungsstift 67 von der breiten Gabel 66 freigegeben wird.

Infolge des Freigebens kann der Schwenkhebel 51 das Übertragungszahnrad 52 an einen der Wickelteller 42, 43 anlegen. Das Servomotorgetriebe 48a ist damit beim Verschwenken des Schaltorganes 54 vom Servobetrieb (das Schaltorgan 54 hat das Schaltrad 52 vom Zentralrad 50 weggeführt; in Fig. 7 ist diese Stellung mit der gestrichelt dargestellten mechanischen Kupplung 40a angedeutet) auf Wickeltellerantrieb umgeschaltet. Über den Schwenkhebel 51 und den Stellhebel 100 wurde gleichzeitig die Andruckrolle 17a/17b in der Zugrichtung an die zugehörige Tonwelle 18a/18b angelegt. Beim im Uhrzeigersinn Verschwenken stößt das Positionierglied 57 die Schalternase 61 an, und der Schalter 60 wird geschlossen.

In diesem Servo-Endschaltpunkt gibt der Schalter einen Schaltimpuls über die Leitung 205 an den Mikroprozessor 46 ab. Der Mikroprozessor 46 hat wieder Ist-Zeit-Intervall mit Soll-Zeit-Intervall verglichen und ein korrektesa Soll-Zeit-Intervall festgestellt. Der Servovorgang kann also fortgesetzt werden. Der Mikroprozessor 46 schaltet, um das Band zu straffen, den Servomotor für z. B. 25 msec auf 12 V ohne Strombegrenzung. Danach wird für 250 msec auf 12 V mit Strombegrenzung umgeschaltet. In diesem Zeitintervall schaltet der Mikroprozessor den Tonwellen-Motor 41 an. Der Spielvorgangbeginnt dadurch mit hohem Drehmoment. Nach Ablauf der 250 msec schaltet der Mikroprozessor den Servomotor 40 über die Leitung 203 und die Schalter 206 und 207 von 12 V auf 2V um. Der Servomotor 40 dreht mit niedrigerem Drehmoment weiter. Der Servomechanismus ist nun abgeschaltet, und das Laufwerk spielt eine Kassette ab.

Zur Druckrollenverstellung hat der Stellhebel 100 den Schieber 105 in Richtung eines Pfeiles 120 nach links verschoben. Die Zahnstangen 111 haben über die Zahnsegmente 110 die Exzenterscheiben 109 im Uhrzeigersinn verdreht. Dabei hat der Stift 114 des rechts gelegenen Bügels 112a die Oberfläche 121 des Exzenters 109 verlassen und ist gegen eine Kante 122 aufgelaufen, wobei die Feder 115a den Stift 114 ständig gegen die Kante 122 drückt. Gleichzeitig ist die Andruckrolle 17a damit gegen die Tonwelle 18a angelegt worden. Das Ablaufen des Stiftes 114 von der Oberfläche 121 über eine Ecke 123 zu der Kante 122 hat gleichzeitig zur Folge gehabt, daß die zuvor von dem Stellhebel 100 eingeleitete Verschiebung des Schiebers 105 in Richtung des Pfeiles 120 nun von dem Stift 114 übernommen wurde. Während nun der Stift 114 der rechten Exzenterscheibe 109 auf die niedrigere Kante 122 aufgelaufen ist, ist der Stift 114 der linken Exzenterscheibe 109 von der Kante 122 über die Ecke 123 auf die Oberfläche 121 aufgelaufen. Dies hat bewirkt, daß der Bügel 112b im Uhrzeigersinn gegen die Kraft der Feder 115b verschwenkt wurde und sich die Andruckrolle 17b von der Tonwelle 18b abgehoben hat.

Die elektrische Steuerung des Laufwerkes erfolgt immer über den einen Schalter 60 und den Mikroprozessor 46. Steuerbefehle von außen gehen ihr über Tasten 214 oder dergl. zum Mikroprozessor 46.

Auch das Bandende, also das Anhalten des Motors 40 wird über den Mikroprozessor 46 detektiert. Der durch den Servomotor 40 fließende Strom fließt auch durch einen Widerstand 210 (Fig. 7). Infolge von Kommutierungsunterbrechungen des Stromes im Gleichstrom-Servomotor 40 wird auch der Stromfluß am Widerstand 210 pulsieren. Der durch den Widerstand 210 pulsierende Strom verursacht am Widerstand 210 einen pulsierenden Spannungsabfall. Die Spannungsimpulse werden an einem Differenzierglied 211 differenziert. Mit der differenzierten Spannung wird ein Monoflop 212 getriggert. Die Trigger-Impulse werden über die Leitung 204 dem Mikroprozessor 46 zugeführt, der die Impulse zählt. Bleiben die Impulse infolge des Bandstillstandes aus, dann stellt der Mikroprozessor 46 Bandstillstand fest und dreht die Motordrehrichtung durch Umsteuerung der Leistungsverstärker 208, 209 über die Leitungen 201 und 202 um. Diese Drehrichtungsumkehr bewirkt, daß der Stellhebel 100 zunächst den Schieber 105 in Richtung eines Pfeiles 124 verstellt, bis an der linken Exzenterscheibe 109 der Stift 114 über die Ecke 123 hinweg gelaufen ist und der Stift 114 dann über die Kante 122 die weitere Verschiebung des Schiebers 105 in Richtung des Pfeiles 124 übernommen hat. Dabei hat sich die Andruckrolle 17a von der Tonwelle 18a gelöst, während sich die Andruckrolle 17b an die Tonwelle 18b angelegt hat. Gleichzeitig ist das Übertragungszahnrad 52 von dem Wickelteller 42 übergeschwenkt zu dem Wickelteller 43. Während der Drehrichtungsumkehr sind die Schalter 206 und 207 kurzfristig vom Mikroprozessor auf 12 V umgeschaltet, um den Umschaltvorgang zu beschleunigen.

Soll der Spielbetrieb beendet werden, was beispielsweise durch Eindrücken einer Taste erfolgen kann, dann veranlaßt der Mikroprozessor 46 über die Steuerleitung 215 und den Verstärker 216 die Haltemagnetvorrichtung 15 durch Abschalten das Zurückfallen der Kopfplatte 3 in die Stop-Stellung durch ein Verschwenken unter der Wirkung der Feder 37 entgegen dem Uhrzeigersinn. Diese Verschwenk-Endstellung ist in Fig. 5 dargestellt. Die Transportnase 19 ist dabei gegen das rechte Ende der Servostange 14 aufgelaufen. Gleichzeitig hat die Steuernase 75 das Steuerglied 73 nach links verschoben und in Anlage mit der Schräge 55a des Schaltorganes 54 gebracht. Das Schaltrad 63 kuppelt nunmehr wieder das Zentralzahnrad 50 mit der Servostange 14. Gleichzeitig hat die breite Gabel 66 den Begrenzungsstift 67 so weit zur Mitte geschwenkt, daß das Übertragungszahnrad 52 von dem Wickelteller 42 abgehoben ist. Durch die Bewegung des Schaltorgans 54 entgegen dem Uhrzeigersinn hat das Positionierglied 57 die Schalternase 61 freigegeben. Dieses Freigeben bedeutet für den Mikroprozessor 46, daß ein neuer Befehl kommt. Dieser Befehl kann durch Drücken einer Bedienungstaste 214 gegeben werden. Diese Bedienungstaste sagt der Logikschaltung 46, wie es weitergehen soll. Weitergehen kann es wie folgt:
1. Für den Fall, daß Stand-by gewünscht wird, schaltet der Mikroprozessor 46 den Servomotor 40 aus.
2. Für den Fall, daß Eject gewünscht wird gemäß Fig. 3, wird die Servostange 14 nach links bewegt, was über das Kupplungsglied 82 zum Auswerfen der Kassette 86 führt. Die Übertotpunktfeder 98 wirft dabei die Kassette aus. Der Schalter 61 wird bei Beendigung des Auswurfvorganges geschlossen, und der Mikroprozessor 46 erkennt, daß er den Servomotor 40 abschalten kann.
3. Ist schneller Vor- oder Rücklauf gewünscht, dann wird die Haltemagnetvorrichtung 15 auf bereits beschriebene Weise erregt und die Servostange 14 nach rechts gefahren, wie in Fig. 6 gezeigt wird. Durch Verlängerung des Armes 11 kann die Kopfplatte 3 nicht in die Play-Stellung gelangen. In dieser Stellung sorgt der Mikroprozessor durch das Anlegen des Motors an eine Spannung von 12 V für ein hohes Drehmoment des Motors, damit ein schneller Bandtransport stattfinden kann.
4. Ist erneuter Spielbetrieb gewünscht, dann sorgt der Mikroprozessor 46 dafür, daß die Servostange 14 wieder nach rechts geschoben wird (Fig. 4), wobei die Kopfplatte in ihre Spielstellung verschwenkt.

Das Laufwerk kann zu irgendeinem Zeitpunkt auch während des Servobetriebes ausgeschaltet werden; es verharrt dann in der Ausschaltstellung bei abgefallener Kopfplatte. Beim erneuten Einschalten wird zunächst der Servomotor 40 in Auswerfrichtung zum Reset eingeschaltet. Die Steuerstange 14 fährt nach links bis zum nächsten Schaltpunkt und erkennt diesen. Von diesem Erkennen an laufen die Servovorgänge in der bereits beschriebenen Weise ab.

Während des Spiel- oder Schnellspulbetriebes werden die vom Monoflop 212 über die Leitung 204 an den Mikroprozessor 46 abgegebenen Impulse gezählt, aufaddiert und in dem Display zur Anzeige gebracht. Die Impulszählung umfaßt Bandlängen- und Drehrichtungsanzeige.

Der Servomotor 40 treibt ein Servomotorgetriebe 48a an, das als Zweifunktionsgetriebe mit angepaßten Untersetzungsgetriebezügen für den Steuerstangenantrieb und den Wickeltellerantrieb ausgebildet ist. Der Wirkungsgrad des Untersetzungsgetriebes für den Wickeltellerantrieb ist dabei so optimiert, daß sich der am Wickelteller wirksame Drehzahl-Drehmomentenverlauf des Servomotors 40 so weit an den Wickelmoment-Wickeldurchmesser-Verlauf am Wickelteller anpaßt, daß die veröaif daß die Wickelteller ohne Zwischenschaltung einer Rutschkupplung antreibbar sind. Das Getriebe zwischen Servomotor 40 und Wickelteller 42 oder 43 besteht dabei aus der Schneckenwelle 48, dem Untersetzungsrad 49, das aus den zwei über eine Überlastkupplung verbundenen Teilrädern 49a und 49b besteht, dem Zentralzahnrad 50 und dem Übertragungszahnrad 52. Es handelt sich also um alle Zahnräder zwischen der Welle des Servomotors 40 und den Wickeltellern 42 oder 43.

Das Wickelmoment an dem aufwickelnden Wickelteller ändert sich bei wechselndem Wickeldurchmesser oder entsprechender Wickeltellerdrehzahl. Bei einem kleinen Wickeldurchmesser ist das Wickelmoment hoch und auch die Drehzahl des aufspulenden Wickeltellers hoch. Bei einem großen Wickel das Wickelmoment auf aufwickelnden Teller klein und auch die Drehzahl des aufwickelnden Tellers klein. Gleichzeitig ist das Drehmoment eines Gleichstrom-Servomotors bei niedriger Drehzahl hoch und bei hoher Drehzahl niedrig. Durch eine geschickte Auswahl bzw. Einpassung der Drehzahl-Drehmomentkennlinien läßt es sich erreichen, daß die Bandzugkraft über dem Durchmesser des ziehenden Wickels zwischen einem kleinen, schnell spulenden Wickel und einem großen, langsam spulenden Wickel nahezu konstant ist.

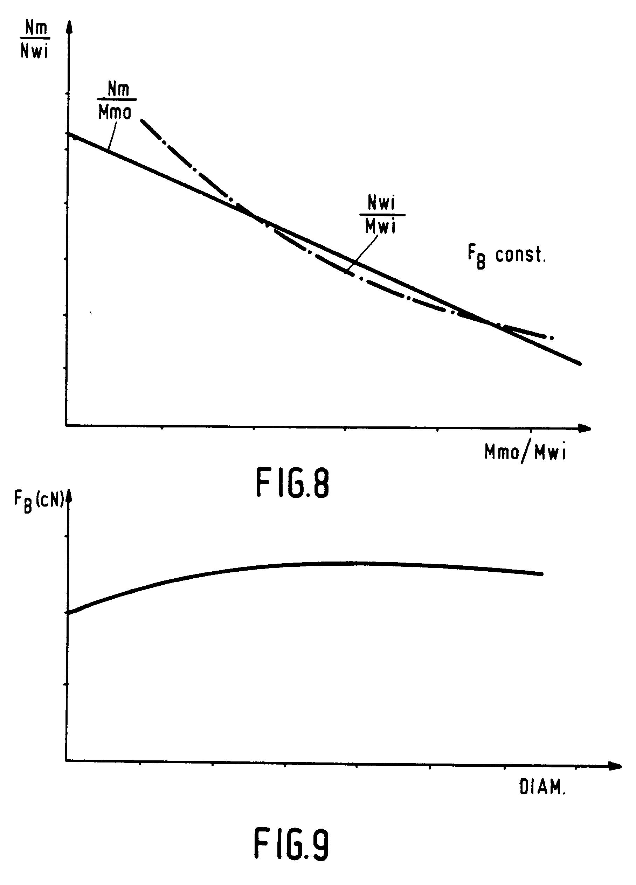

In Fig. 8 und 9 werden diese Gegebenheiten veranschaulicht. Die durchgezogene Kennlinie n/Mₘₒ zeigt, daß die Motordrehzahl nₘ bei steigendem Motormoment angenähert linear abnimmt. Die strichpunktierte Kennlinie zeigt, daß bei fallender Drehzahl n_{wi} und konstanter Bandzugkraft (F_{B} = const.) das am Wickelteller benötigte Wickelmoment M_{wi} ebenfalls steigend ist, wobei die Kennlinie n_{wi}/M_{wi} gekrümmt ist. Die Lage der Kennlinien läßt sich in einem mittleren Bereich durch Einstellung des Getriebewirkungsgrades aneinander annähern, so daß im Endeffekt an den Wickeltellern, wie in Fig. 9 dargestellt ist, über den Durchmesser des Zugwickels hinweg eine etwa konstante Zugkraft F_{B}, gemessen in cN, erhalten wird. Damit kann eine die Momentdifferenzen ausgleichende Rutschkupplung entfallen.

## Patentansprüche

1. Laufwerk für ein Magnetbandkassettengerät mit einem Tonwellen-Antriebsmotor und mit einer von einem Servomotor (40) über ein Servogetriebe (48a) angetriebenen, hin und zurück längsverschieblichen Steuerstange (14), die auf ihrem Verschiebeweg Funktionsteile des Gerätes, wie eine Kopfplatte (3), einen Lademechanismus (87) und einen Umschaltmechanismus steuert unter Zuhilfenahme eines Mikroprozessors (46), einer Steuervorrichtung (46a) für den Servomotor (40) und eines dem Mikroprozessors (46) Schaltsignale zuleitenden und von der Steuerstange (14) schaltbaren Schaltmittels (60), wobei der Mikroprozessor (46) die Schaltsignale in Steuerbefehle für den Servomotor (40) umsetzt, dadurch gekennzeichnet, daß
a) das Schaltmittel (60), auch von einem mechanischen Schaltorgan (54) schaltbar ist, das von der Steuerstange (14) unabhängige Bewegungen ausführen kann und dessen Stellung gegenüber der Steuerstange (14) während des Servobetriebes von der Steuerstange (14) zeitweise bestimmt wird,
b) der Mikroprozessor (46) aus dem bei jedem mechanischen Anstoßen durch Steuerstange (14) oder Schaltorgan (54) empfangenen Schaltsignal die momentanen räumlichen Stellungen des Schaltmittels (60), der Steuerstange (14) und/oder des Schaltorgans (54) ermittelt aus der Stellung des Schaltmittels (60) und dem gespeicherten letzten, zuvor erhaltenen Schaltsignal,
c) der Mikroprozessor (46) die Schaltsignale des Schaltmittels (60) auch umsetzt in Steuerbefehle für den Tonwellen-Antriebsmotor (41) und eine Haltemagnetvorrichtung (15) für die Kopfplatte (3), die in der Spiel- bzw. Schnellspulstellung mittels dieser Haltemagnetvorrichtung (15) gehalten wird, wobei der Servomotor die Wickelteller antreibt.

2. Laufwerk nach Anspruch 1, dadurch gekennzeichnet, daß das Schaltmittel (60) ein Schalter ist, der beim Öffnen und beim Schließen mittels einer Schaltnase (61) ein Schaltsignal abgibt.

3. Laufwerk nach Anspruch 1, dadurch gekennzeichnet, daß der Mikroprozessor (46) über die Steuervorrichtung die Drehrichtung des Servomotors vorgibt und die Spannungsversorgung des Servomotors umschaltet zwischen einer hohen Versorgungsspannung für den Betrieb des Lade- und Servomechanismus sowie das Schnellspulen und einer niedrigen Versorgungsspannung für den Wickeltellerantrieb während des Spielbetriebes.

4. Laufwerk nach Anspruch 3, dadurch gekennzeichnet, daß die Steuervorrichtung mit in den Motorzuleitungen (201a, 202a) vorgesehenen Brückenleistungsverstärkern (208, 209) versehen ist.

5. Laufwerk nach Anspruch 4, dadurch gekennzeichnet, daß die Steuervorrichtung mit einem Impulsdetektor (210, 212) versehen ist, der Betriebsfunktionen des Servomotors (40) über die Spannungsversorgung der Brückenleistungsverstärker (208, 209) detektiert.

6. Laufwerk nach Anspruch 5, dadurch gekennzeichnet, daß die Spannungsversorgungsleitungen (206, 207) der Brückenleistungsverstärker (208, 209) auf ein Differenzierglied (210, 211) geschaltet sind, das aus der pulsierenden Gleichspannung des Motors (40) zählbare Impulse bildet.

7. Laufwerk nach Anspruch 6, dadurch gekennzeichnet, daß die Impulse des Differenzgliedes (210, 211) über ein Monoflop (212) dem Mikroprozessor (46) zugeführt werden, der die Impulse zählt und daraus Zeitwerte bildet.

8. Laufwerk nach Anspruch 7, dadurch gekennzeichnet, daß der Mikroprozessor die Ist-Zeiten zwischen aufeinanderfolgend empfangenen Schaltsignalen ermittelt und mit gespeicherten Soll-Zeiten vergleicht und daß der Mikroprozessor (46) den Servomotor (40) bei unzulässigen Zeitdifferenzen auf die Auswerfdrehrichtung umschaltet.

9. Laufwerk nach Anspruch 1, dadurch gekennzeichnet, daß das mechanische Schaltorgan (54) jeweils am Ende des Servobetriebes zum Einleiten des Spielbetriebes von der Steuerstange (14) zur Ausführung eigener Bewegungen freigegeben wird, wobei infolge der eigenen Bewegung des Schaltorgans (54) von diesem elektrisch durch das Anstoßen des Schaltmittels (60) die Einschaltung des Tonwellen-Antriebsmotors (41) sowie die Absenkung der Versorgungsspannung des Servomotors (40) und mechanisch die Umschaltung des Servomotorgetriebes (48a) von dem Servoantrieb (Steuerstange 14) auf den Bandantrieb (Wickelteller 42, 43) bewirkt wird.

10. Laufwerk nach Anspruch 9, dadurch gekennzeichnet, daß das Servomotorgetriebe (48a) als Zweifunktionsgetriebe mit angepaßten Untersetzungsgetriebezügen für den Steuerstangenantrieb und den Wickeltellerantrieb ausgebildet ist und daß der Untersetzungsgetriebezug für den Wickeltellerantrieb derart ausgelegt ist, daß sich der am Wickelteller (42, 43) wirksame Drehzahl-Drehmomentverlauf des Servomotors (40) so weit an den Wickeldrehzahl-Wickelmomentverlauf anpaßt, daß die Bandzugkraft (F_{B}) am aufwickelnden Wickeldurchmesser weitgehend gleich ist.

11. Laufwerk nach Anspruch 10, dadurch gekennzeichnet, daß als Parameter für die Anpassung die Kennlinie n/Mₘₒ des Servomotors, das Übersetzungsverhältnis und der Wirkungsgrad mit der Zahnradmaterialpaarung herangezogen werden.

## Claims

1. A deck for a magnetic tape cassette apparatus comprising a capstan drive motor and a control rod (14) which is longitudinally movable to and fro and is driven by a servo motor (40) *via* a servo mechanism (48a), which control rod along its path of movement controls functional parts of the apparatus, such as a head-mounting plate (3), a loading mechanism (87) and a switching mechanism with the aid of a microprocessor (46), a control device (46a) for the servo motor (40), and a switching means (60) which supplies switching signals to the microprocessor (46) and is switchable by the control rod (14), the microprocessor (46) converting the switching signals into control commands for the servo motor (40), characterised in that
a) the switching means (60) is also switchable by a mechanical switching member (54) which can perform movements which are independent of the control rod (14) and whose position relative to the control rod (14) is temporarily determined by the control rod (14) during servo operation,
b) by means of the switching signal received upon every mechanical actuation by the control rod (14) or the switching member (54) the microprocessor (46) derives the instantaneous geometrical positions of the switching means (60), of the control rod (14) and/or of the switching member (54) from the position of the switching means (60) and the previously received, stored last switching signal,
c) the microprocessor (46) also converts the switching signals from the switching means (60) into control commands for the capstan drive motor (41) and an electromagnetic holding device (15) for the head-mounting plate (3), which plate is held in the play position or the fast-wind position by means of said electromagnetic holding device (15), the reel discs being driven by the servo motor.

2. A deck as claimed in Claim 1, characterised in that the switching means (60) is a switch which supplies a switching signal when it is opened and closed by means of a switch actuator (61).

3. A deck as claimed in Claim 1, characterised in that the microprocessor (46) defines the direction of rotation to the servo motor *via* the control device and switches the voltage supply of the servo motor between a high supply voltage for the actuation of the loading and servo mechanism as well as for fast winding and a low supply voltage for the reel disc drive during the play mode.

4. A deck as claimed in Claim 3, characterised in that the control device comprises push-pull power amplifiers (208, 209) arranged in the motor supply lines (201a, 202a).

5. A deck as claimed in Claim 4, characterised in that the control device comprises a pulse detector (210, 212) which detects operating functions of the servo motor (40) *via* the voltage supply of the power amplifiers (208, 209).

6. A deck as claimed in Claim 5, characterised in that the voltage supply lines (206, 207) of the power amplifiers (208, 209) are connected to a differentiating network (210, 211) which derives pulses to be counted from the pulsating direct voltage of the motor (40).

7. A deck as claimed in Claim 6, characterised in that the pulses are applied from the differentiating network (210, 211) to the microprocessor (46) *via* a monostable multivibrator (212), which microprocessor counts the pulses and derives time values therefrom.

8. A deck as claimed in Claim 7, characterised in that the microprocessor determines the actual time intervals between successively received switching signals and compares them with stored nominal time intervals, and in that the microprocessor (46) switches the servo motor (40) to the direction of rotation for the eject mode in the case of impermissible differences in time.

9. A deck as claimed in Claim 1, characterised in that, in order to initiate the play mode, the mechanical switching member (54) is enabled by the control rod (14) to perform independent movements each time at the end of the servo mode, the independent movements of the switching member (54) electrically causing the capstan drive motor (41) to be started and the supply voltage to the servo motor (40) to be reduced by actuation of the switching means (60) and causing the servo motor drive (48a) to be changed over mechanically from servo drive (control rod 14) to tape drive (reel discs 42, 43).

10. A deck as claimed in Claim 9, characterised in that the servo motor drive (48a) is constructed as a dual-function drive comprising reduction gear trains adapted to the control rod drive and the reel disc drive, and in that the reduction gear train for the reel disc drive is constructed in such a way that the speed-torque characteristic of the servo motor (40) acting at the reel discs (42, 43) is adapted to the winding speed/winding torque characteristic in such a way that the tape pull (F_{B}) at the take-up tape-spool diameter is substantially constant.

11. A deck as claimed in Claim 10, characterised in that the n/Mₘₒ characteristic of the servo motor, the reduction ratio and the efficiency in conjunction with the gear wheel material combination are used as adaptation parameters.

## Revendications

1. Mécanisme d'entraînement pour un appareil à cassette de bande magnétique comportant un moteur d'entraînement de cabestan et une tige de commande (14) mobile longitudinalement en va-et-vient et entraînée par un servomoteur (40) par l'intermédiaire d'une servotransmission (48a), cette tige commandant, sur sa course de déplacement, des parties fonctionnelles de l'appareil comme une plaque porte-tête (3), un mécanisme de chargement (87) et un mécanisme de commutation et ce, à l'aide d'un microprocesseur (46), d'un dispositif de commande (46a) pour le servomoteur (40) et d'un moyen de commutation (60) acheminant des signaux de commutation au microprocesseur (46) et pouvant être commutés par la tige de commande (14), le microprocesseur (46) convertissant les signaux de commutation en ordres de commande pour le servomoteur (40), caractérisé en ce que :
a) le moyen de commutation (60) peut également être commuté par un élément de commutation mécanique (54) qui peut effectuer des mouvements indépendants de la tige de commande (14) et dont la position par rapport à la tige de commande (14) est déterminée périodiquement pendant le mode d'asservissement de la tige de commande (14);
b) le microprocesseur (46), à partir du signal de commutation reçu lors de chaque sollicitation mécanique par la tige de commande (14) ou l'élément de commutation (54), détermine les positions spatiales instantanées du moyen de commutation (60), de la tige de commande (14) et/ou de l'élément de commutation (54) à partir de la position du moyen de commutation et du dernier signal de commutation mémorisé, reçu précédemment, et
c) le microprocesseur (46) convertit également les signaux de commutation du moyen de commutation (60) en ordres de commande pour le moteur d'entraînement de cabestan (41) et un dispositif à électroaimant de retenue (15) pour la plaque porte-tête (3) qui est retenue dans la position de lecture ou dans la position de bobinage rapide au moyen de ce dispositif à électroaimant de retenue (15), étant entendu que le servomoteur entraîne les plateaux de bobinage.

2. Mécanisme d'entraînement suivant la revendication 1, caractérisé en ce que le moyen de commutation (60) est un commutateur qui émet un signal de commutation lors de son ouverture et de sa fermeture au moyen d'un doigt de commutation (61).

3. Mécanisme d'entraînement suivant la revendication 1, caractérisé en ce que le microprocesseur (46) prédétermine le sens de rotation du servomoteur par l'intermédiaire du dispositif de commande et commute l'alimentation de tension du servomoteur entre une tension d'alimentation élevée pour le fonctionnement du mécanisme de chargement et du mécanisme d'asservissement ainsi que pour le bobinage rapide et une tension d'alimentation basse pour l'entraînement des plateaux de bobinage pendant le mode de lecture.

4. Mécanisme d'entraînement suivant la revendication 3, caractérisé en ce que le dispositif de commande est pourvu d'amplificateurs de puissance en pont (208, 209) prévus dans les lignes d'alimentation (201a, 202a) du moteur.

5. Mécanisme d'entraînement suivant la revendication 4, caractérisé en ce que le dispositif de commande est pourvu d'un détecteur d'impulsions (210, 212) qui détecte les fonctions d'exploitation du servomoteur (40) via l'alimentation de tension des amplificateurs de puissance en pont (208, 209).

6. Mécanisme d'entraînement suivant la revendication 5, caractérisé en ce que les lignes d'alimentation de tension (206, 207) des amplificateurs de puissance en pont (208, 209) sont connectées à un élément différenciateur (210, 211) qui, à partir de la tension continue pulsée du moteur, forme des impulsions (40) pouvant être comptées.

7. Mécanisme d'entraînement suivant la revendication 6, caractérisé en ce que les impulsions de l'élément différenciateur (210, 211) sont acheminées par l'intermédiaire d'un multivibrateur monostable (212) au microprocesseur (46) qui compte les impulsions et en déduit des valeurs de temps.

8. Mécanisme d'entraînement suivant la revendication 7, caractérisé en ce que le microprocesseur détermine les temps effectifs entre des signaux de commutation reçus consécutivement et les compare à des temps de consigne stockés, et le microprocesseur (46) commute le servomoteur (40) sur le sens de rotation d'éjection en cas de différence de temps inacceptable.

9. Mécanisme d'entraînement suivant la revendication 1, caractérisé en ce que l'élément de commutation mécanique (54) est libéré, en vue d'effectuer des mouvements propres, chaque fois à la fin du mode d'asservissement en vue de l'amorçage du mode de lecture par la tige de commande (14), étant entendu que suite aux mouvements propres de l'élément de commutation (54) celui-ci assure, électriquement, en heurtant le moyen de commutation (60), la mise sous tension du moteur d'entraînement de cabestan (41) ainsi que l'abaissement de la tension d'alimentation du servomoteur (40), et mécaniquement, la commutation de la transmission du servomoteur (48a) de l'entraînement asservi (tige de commande 14) à l'entraînement de la bande (plateaux de bobinage 42, 43).

10. Mécanisme d'entraînement suivant la revendication 9, caractérisé en ce que la transmission de servomoteur (48a) est conçue comme une transmission à double fonction avec des rapports de démultiplication adaptés pour l'entraînement de la tige de commande et pour l'entraînement des plateaux de bobinage et le rapport de démultiplication pour l'entraînement des plateaux de bobinage est tel que la courbe de couple/vitesse de rotation du servomoteur (40) agissant sur le plateau de bobinage (42, 43) soit adaptée à la courbe de moment de bobinage/vitesse de bobinage dans une mesure telle que la force de traction (F_{B}) de la bande au niveau du plateau de bobinage envideur soit largement constante.

11. Mécanisme d'entraînement suivant la revendication 10, caractérisé en ce qu'on utilise comme paramètres pour l'adaptation la courbe n/Mₘₒ du servomoteur, le rapport de démultiplication et le rendement avec l'appariement des matières des roues dentées.
